(19) Europäisches Patentamt
European Patent Office
Office européen des brevets

(11) Publication number: **0 357 394 B1**

(12) # EUROPEAN PATENT SPECIFICATION

(45) Date of publication of patent specification: **02.08.95**

(51) Int. Cl.[6]: **C08F 297/08**, C08F 4/64

(21) Application number: **89308756.9**

(22) Date of filing: **30.08.89**

Divisional application 93203154.5 filed on 30/08/89.

(54) **Process for producing propylene block copolymer.**

(30) Priority: **31.08.88 JP 217299/88**
**13.09.88 JP 229412/88**
**20.09.88 JP 236062/88**
**18.10.88 JP 262062/88**

(43) Date of publication of application:
**07.03.90 Bulletin 90/10**

(45) Publication of the grant of the patent:
**02.08.95 Bulletin 95/31**

(84) Designated Contracting States:
**DE FR GB NL**

(56) References cited:
**EP-A- 0 156 512**
**EP-A- 0 246 599**

**PATENT ABSTRACTS OF JAPAN, vol. 12, no. 344 (C-528)[3191], 16th September 1988; & JP-A-63 101 405**

(73) Proprietor: **Mitsubishi Chemical Corporation**
**5-2, Marunouchi 2-chome**
**Chiyoda-ku,**
**Tokyo-to (JP)**

(72) Inventor: **Matsuura, Mitsuyuki Mitsubishi Petrochemical Ltd.**
**Jushi Kenkyusho**
**1, Toho-Cho**
**Yokkaicchi-Shi**
**Mie-Ken (JP)**
Inventor: **Fujita, Takashi Mitsubishi Petrochemical Ltd.**
**Jushi Kenkyusho**
**1, Toho-Cho**
**Yokkaicchi-Shi**
**Mie-Ken (JP)**

(74) Representative: **Kyle, Diana et al**
**Elkington and Fife**
**Prospect House**
**8 Pembroke Road**
**Sevenoaks, Kent TN13 1XR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 357 394 B1

## Description

This invention relates to a process for producing propylene block copolymers having high rigidity and high impact strength with good flowability under the condition where substantially no solvent is used yet at high activity.

Crystalline polypropylene, while having excellent characteristics of rigidity and heat resistance, had on the other hand the problem of low impact strength, particularly low impact strength at a low temperature.

As the method for improving this point, there have been already known a method of forming a block copolymer by polymerizing stepwise propylene and ethylene or another olefin (Japanese Patent Publications Nos. 11230/1968, 16668/1969, 20621/1969, 24593/1974, 30264/1974, Japanese Laid-open Patent Publications Nos. 25781/1973, 115296/1975, 35789/1978 and 110072/1979).

However, when propylene and ethylene are polymerized in two stages or multiple stages, although impact resistance may be improved, there ensues on the other hand the problem that polymers of low crystallinity are formed in a large amount, because the product contains copolymer portions.

Also, for improvement of impact strength of a block copolymer, it has been generally practiced to increase an amount of a rubbery copolymer formed in the block copolymerization. However, the polymer particles tend to be increased in tackiness with the increase of rubbery copolymers, whereby sticking between polymer particles or sticking of the polymer particles onto the device inner wall may occur, whereby it becomes frequently difficult to perform stable running of a polymer production device for a long term. Particularly, in polymerization without employment of a solvent, for example, gas phase polymerization, worsening of flowability due to sticking of polymer particles is a very great problem in running operation. Accordingly, it has been desired to develop a technique which can improve running stability by preventing sticking of polymer particles, even when an amount of rubbery polymers formed may be increased.

The present inventors have studied intensively in order to solve the problems as mentioned above, and consequently found that the above problems can be solved by use of a specific catalyst whereby the present invention has been obtained.

More specifically, the process for producing a propylene block copolymer, in its broadest aspect, comprises practicing the polymerization step (1) shown below in the presence of a catalyst comprising a combination of catalyst components (A) and (B) shown below substantially in the absence of a solvent and practicing the polymerization step (2) shown by continuing the polymerization in the presence of said catalyst consisting essentially of components (A) and (B) substantially in the absence of a solvent thereby producing a propylene block copolymer with a content of a rubbery product of 20 to 80 % by weight, preferably 20 to 70% by weight, the rubbery product being xylene soluble at 20 °C:

### Catalyst

**Component (A):**

A solid catalyst component used as such or after having been subjected to preliminary polymerisation wherein the solid catalyst component is contacted with an olefin in the presence of an organometallic compound obtained by contacting the following components (i) to (v):

component (i): a solid component comprising titanium, magnesium and halogen as the essential components;

component (ii): a silicon compound represented by the formula: $R^1{}_mX_nSi(OR^2)_{4-m-n}$ wherein $R^1$ and $R^2$ are each hydrocarbyl groups, X is a halogen atom, m and n are respectively numbers satisfying equations $0 \leqq m \leqq 3$ and $0 \leqq n \leqq 3$, and yet $0 \leqq (m + n) \leqq 3$;

component (iii): a silicon compound represented by the formula: $R^4{}_pSiX_{4-p}$ wherein $R^4$ is a hydrocarbyl group, X is a halogen atom and p is a number satisfying an equation $0 \leqq p < 4$,

component (iv): an organoaluminium compound; and optionally

component (v): at least one compound selected from styrenes, olefins having 4 to 20 carbon atoms and diene compounds having 4 to 20 carbon atoms in an amount of 0 to 100 in terms of molar ratio relative to the titanium component constituting the component (i);

Component (B): an organoaluminum compound;

Polymerization steps:

(1) the step of polymerizing propylene or a propylene/ethylene mixture in one stage or multiple stages to form a propylene homopolymer or a propyleneethylene copolymer with an ethylene content of 7% by

weight or less, the amount of polymer in this step corresponding to 20 to 80% by weight of the total amount of the polymers produced;

(2) the step of polymerizing a propylene/ethylene mixture in one stage or multiple stages to form a rubbery copolymer of propylene in a weight ratio of propylene/ethylene of 70/30 to 30/70, the amount of polymer produced in this step corresponding to 80 to 20% by weight of the total amount of the polymers produced.

Polymerization of propylene together with ethylene into a block copolymer substantially without using a solvent with the catalyst according to the present invention results in a propylene block copolymer having high rigidity and high impact strength at high activity, namely, at high yield per catalyst and yet stably.

Also, according to the present invention, even when the weight of rubbery copolymer components may become much (e.g. 60% by weight), tackiness of polymer particles is little, and therefore the trouble in running operation which has been a problem in the prior art can be solved.

Further, by carrying out polymerization with the catalyst of the present invention, the catalyst activity can be high during polymerization of rubbery copolymer components, i.e. during the polymerization step (2) in the present invention. In most catalyst systems known in the art, the catalyst activity will be frequently lowered during polymerization for producing rubbery copolymer components to pose a problem. The catalyst system of the present invention is free from such problems as mentioned above to be also extremely advantageous in commercial production.

Further, as another advantage when employing the catalyst of the present invention, good properties of the polymer thereby produced may be mentioned. For example, referring to polymer bulk density, it is 0.45 g/cc (1 cc = 1 $cm^3$) or higher in the present invention, and sometimes a value of 0.50 g/cc or even higher may be possible.

## Catalyst

The catalyst of the present invention comprises a combination of specific components (A) and (B), in a specific amount used. Here, the wording "comprises a combination" does not mean that the components are limited only to those mentioned but does not exclude co-presence of other components compatible with or suited for the purpose.

## Component (A)

The component (A) of the catalyst of the present invention is a solid catalyst component obtained by contacting the components (i) to (v) shown below. Here, the wording "obtained by contacting" does not mean that the components are limited only to those mentioned, namely (i) to (v), and does not exclude co-presence of other components suited for the purpose.

## Component (i)

The component (i) is a solid component containing titanium, magnesium and a halogen as the essential components. Here, the wording "containing as the essential components" indicates that it can also contain other elements suited for the purpose than the three components mentioned, that these elements can exist in any desired compound suited for the purpose respectively, and also that these elements can also exist in the form mutually bonded together. Solid components containing titanium, magnesium and halogen are known *per se*. For example, those as disclosed in Japanese Laid-open Patent Publications Nos. 45688/1978, 3894/1979, 31092/1979, 39483/1979, 94591/1979, 118484/1979, 131589/1979, 75411/1980, 90510/1980, 90511/1980, 127405/1980, 147507/1980, 155003/1980, 18609/1981, 70005/1981, 72001/1981, 86905/1981, 90807/1981, 155206/1981, 3803/1982, 34103/1982, 92007/1982, 121003/1982, 5309/1983, 5310/1983, 5311/1983, 8706/1983, 27732/1983, 32604/1983, 32605/1983, 67703/1983, 117206/1983, 127708/1983, 183708/1983, 183709/1983, 149905/1984 and 149906/1984 may be employed.

As the magnesium compound which is the magnesium source to be used in the present invention, magnesium dihalides, dialkoxymagnesiums, alkoxymagnesium halides, magnesium oxyhalides, dialkylmagnesiums, magnesium oxide, magnesium hydroxide, carboxylates of magensium, etc. are exemplified. Among these magnesium compounds, magnesium dihalides, particularly $MgCl_2$, are preferred.

As the titanium compound which is the titanium source, compounds represented by the formula $Ti(OR^6)_{4-n}X_n$ (wherein $R^6$ is a hydrocarbyl group, preferably having about 1 to 10 carbon atoms, X represents a halogen atom and n is an integer of $0 \leqq n \leqq 4$) and polymers of a titanium tetraalkoxide. Specific examples may include:

titanium tetrahalides such as $TiCl_4$ and $TiBr_4$;

alkoxytitanium halides such as

$Ti(OC_2H_5)Cl_3$,
$Ti(OC_2H_5)_2Cl_2$,
$Ti(OC_2H_5)_3Cl$,
$Ti(O\text{-}iC_3H_7)Cl_3$,
$Ti(O\text{-}nC_4H_9)Cl_3$,
$Ti(O\text{-}nC_4H_9)_2Cl_2$,
$Ti(OC_2H_5)Br_3$,
$Ti(OC_2H_5)(OC_4H_9)_2Cl$,
$Ti(O\text{-}nC_4H_9)_3Cl$,
$Ti(O\text{-}C_6H_5)Cl_3$,
$Ti(O\text{-}iC_4H_9)_2Cl_2$,
$Ti(OC_5H_{11})Cl_3$,
$Ti(OC_6H_{13})Cl3$,

and titanium tetraalkoxides such as

$Ti(OC_2H_5)_4$,
$Ti(O\text{-}iC_3H_7)_4$,
$Ti(O\text{-}nC_3H_7)_4$,
$Ti(O\text{-}nC_4H_9)_4$,
$Ti(O\text{-}iC_4H_9)_4$,
$Ti(O\text{-}nC_5H_{11})_4$,
$Ti(O\text{-}nC_6H_{13})_4$,
$Ti(O\text{-}nC_7H_{15})_4$,
$Ti(O\text{-}nC_8H_{17})_4$,
$Ti[OCH_2CH(CH_3)_2]_4$,
$Ti[OCH_2CH(C_2H_5)C_4H_9]_4$.

Among them, preferable are $Ti(OC_2H_5)_4$, and $Ti(O\text{-}nC_4H_9)_4$.

Polymers of a titanium tetraalkoxide may include those represented by the following formula:

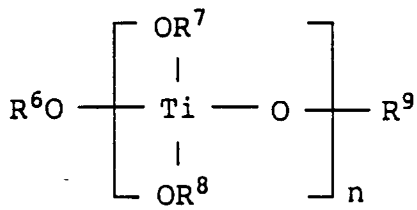

Here, $R^6$ - $R^9$ represent the same or different hydrocarbyl groups, preferably aliphatic hydrocarbyl group having 1 to 10 carbon atoms or aromatic hydrocarbyl groups, particularly aliphatic hydrocarbyl groups having 2 to 6 carbon atoms. n represents a number of 2 or more, particularly a number up to 20. The value of n should be desirably selected so that the polytitanate itself or as a solution can be provided in a liquid state for the contact step with other components. A suitable n selected in view of ease of handling may be about 2 to 14, preferably 2 to 10. Specific examples of such polytitanates may include n-butylpolytitanate (n = 2 to 10), hexylpolytitanate (n = 2 to 10), n-octylpolytitanate (n = 2 to 10). Among them, n-butylpolytitanate is preferred.

It is also possible to use, as the titanium compound for the titanium source, a molecular compound obtained by reacting an electron donor as described below with a compound $TiX'_4$ (where X' represents a halogen). Specific examples may include:

$TiCl_4 \cdot CH_3COC_2H_5$,
$TiCl_4 \cdot CH_3CO_2C_2H_5$,
$TiCl_4 \cdot C_6H_5NO_2$,
$TiCl_4 \cdot CH_3COCl$,
$TiCl_4 \cdot C_6H_5COCl$,
$TiCl_4 \cdot C_6H_5CO_2C_2H_5$,
$TiCl_4 \cdot ClCOC_2H_5$,
$TiCl_4 \cdot C_4H_4O$.

It is also possible to use, as the titanium compound for the titanium source, a titanocene compound, for example dicyclopentadienyldichloro titanium, dicyclopentadienyldimethyl titanium and bisindenyldichlorotitanium.

Among these titanium compounds, preferable are $TiCl_4$, $Ti(OEt)_4$, $Ti(OBu)_4$, and $Ti(OBu)Cl_3$.

As to the halogen source, it is a common practice to supply the halogen from the halide compounds of magnesium and/or titanium as described above, but it can be also supplied from non halogenating agents such as halogen compounds of aluminum, halogen compounds of silicon, halogen compounds of phosphorus.

The halogen contained in the catalyst components may be fluorine, chlorine, bromine, iodine or a mixture of these, particularly preferably chlorine.

The solid component to be used in the present invention can also include, in addition to the above essential components: a silicon compound such as $SiCl_4$ and $CH_3SiCl_3$; a polymeric silicon compound having the structure represented by the following formula:

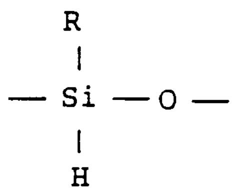

(wherein R is a hydrocarbyl group having 1 to 10, particularly 1 to 6 carbon atoms) and having a viscosity of 10 centistokes (1 centistoke = 1 $mm^2/J$) to to 100 centistokes, such as methylhydropolysiloxane, ethylhydropolysiloxane, phenylhydropolysiloxane, cyclohexylhydropolysiloxane, 1,1,3,3-tetramethyldisiloxane, 1,3,5,7-tetramethylcyclotetrasiloxane, 1,3,5,7,9-pentamethylcyclopentasiloxane and the like; an aluminum compound such as $Al(OiC_3H_7)_3$, $AlCl_3$, $AlBr_3$, $Al(OC_2H_5)_3$, $Al(OCH_3)_2Cl$; and a boron compound such as $B(OCH_3)_3$, $B(OC_2H_5)_3$, $B(OC_6H_5)_3$.

These optional compounds may remain in the solid component as the components of silicon, aluminum and boron.

Further, in preparing the solid component, use can also be made of an electron donor as what is called "an inside donor".

Examples of the electron donor or the inside donor which can be used for preparation of the solid component may include oxygen-containing electron donors such as alcohols, phenols, ketones, aldehydes, carboxylic acids, esters of an organic acid or an inorganic acid, ethers, acid amides, acid anhydrides, and the like; and nitrogen-containing electron donors such as ammonia, amines, nitriles and isocyanates.

More specifically, there may be included: (a) alcohols having 1 to 18 carbon atoms, such as methanol, ethanol, propanol, pentanol, hexanol, octanol, dodecanol, octadecyl alcohol, benzyl alcohol, phenylethyl alcohol, cumyl alcohol and isopropylbenzyl alcohol; (b) phenols hawing 6 to 25 carbon atoms which may or may not have an alkyl group, such as phenol, cresol, xylenol, ethylphenol, propylphenol, cumylphenol, nonylphenol and naphthol; (c) ketones having 3 to 15 carbon atoms, such as acetone, methyl ethyl ketone, methyl isobutyl ketone, acetophenone and benzophenone; (d) aldehydes having 2 to 15 carbon atoms, such as acetaldehyde, propionaldehyde, octylaldehyde, benzaldehyde, tolualdehyde and naphthaldehyde; (e) organic acid esters having 2 to 20 carbon atoms, such as methyl formate, methyl acetate, ethyl acetate, vinyl acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, diethyl phthalate, dibutyl phthalate, diheptyl phthalate, $\gamma$-butyrolactone, $\alpha$-valerolactone, coumarine, phthalide, ethylene carbonate, cellosolve acetate, cellosolve isobutyrate and cellosolve benzoate; (f) inorganic acid esters, such as silicates such as ethyl silicate, butyl silicate and phenyl-triethoxysilane, (g) acid halides having 2 to 15 carbon atoms, such as acetyl chloride, benzoyl chloride, toluyloic chloride, anisic chloride, phthaloyl chloride and phthaloyl isochloride; (h) ethers having 2 to 20 carbon atoms, such as methyl ether, ethyl ether, isopropyl ether, butyl ether, amyl ether, tetrahydrofuran, anisole and diphenyl ether (i) acid amides, such as acetic amide, benzoic amide and toluyloic amide; (j) amines, such as monomethylamine, monoethylamine, diethylamine, tributylamine, piperidine, tribenzylamine, aniline, pyridine, picoline and tetramethylethylenediamine; and (k) nitriles, such as acetonitrile, benzonitrile and tolunitrile. One or more of these electron donors can be used

in preparing the solid catalyst component. Among them, preferred are organic acid esters and acid halides, particularly preferably phthalic acid esters, phthalic acid halides and cellosolve acetate.

The amounts of the above respective components used may be at any desired level, so long as the advantages inherent in the present invention can be attained, but, generally speaking, the following ranges are preferred.

The amount of the titanium compound used may be within the range of $1 \times 10^{-4}$ to 1000, preferably 0.01 to 10, in terms of molar ratio relative to the amount of the magnesium compound used. When a compound as the halogen source is used, its amount used may be within the range of $1 \times 10^{-2}$ to 1000, preferably 0.1 to 100, in terms of a molar ratio relative to magnesium used, irrespectively of whether the titanium compound and/or the magnesium compound may contain a halogen or not.

The amount of the silicon, aluminum or boron compound used may be within the range of $1 \times 10^{-3}$ to 100, preferably 0.01 to 10, in terms of a molar ratio to the amount of the above magnesium compound used.

The amount of the electron donor compound used may be within the range of $1 \times 10^{-3}$ to 10, preferably 0.01 to 5, in terms of a molar ratio relative to the amount of the above magnesium compound used.

The solid component for preparing the component (i) may be prepared from the titanium source, the magnesium source and the halogen source, and further optionally other components such as an electron donor according to methods mentioned below.

(a) A method in which a magnesium halide optionally together with an electron donor is contacted with a titanium compound.

(b) A method in which alumina or magnesia is treated with a phosphorus halide compound, and the product is contacted with a magnesium halide, an electron donor, a titanium halide-containing compound.

(c) A method in which the solid component obtained by contacting a magnesium halide with a titanium tetraalkoxide and a specific polymeric silicon compound is contacted with a titanium halide compound and/or a silicon halide compound.

As the polymeric silicon compound, those represented by the following formula are suitable:

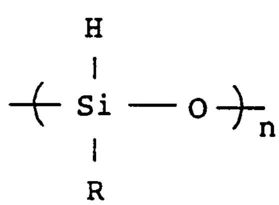

wherein R is a hydrocarbyl group having about 1 to 10 carbon atoms, n is a polymerization degree such that the viscosity of the polymeric silicon compound may be 1 to 100 centistokes.

Among them, methylhydrogen polysiloxane, 1,3,5,7-tetramethylcyclotetrasiloxane, 1,3,5,7,9-pentamethylcyclopentacycloxane, ethylhydrogen polysiloxane, phenylhydrogen polysiloxane, and cyclohexylhydrogen polysiloxane are preferred.

(d) A method in which a magnesium compound is dissolved in a titanium tetraalkoxide and an electron donor, and the solid component precipitated from the solution upon addition thereto of a halogenating agent or a titanium halide compound is contacted with a titanium compound.

(e) A method in which an organomagnesium compound such as Grignard reagent is reacted with a halogenating agent, a reducing agent, and then the reaction product is contacted with an electron donor and a titanium compound.

(f) A method in which an alkoxy magnesium compound is contacted with a halogenating agent and/or a titanium compound in the presence or absence of an electron donor.

(g) A method in which a magnesium dihalide and a titanium tetraalkoxide and/or a polymer thereof are contacted, and subsequently contacted with a polymeric silicon compound is contacted.

Contact of the three components can be also effected in the presence of a dispersing medium. As the dispersing medium in that case, hydrocarbons, halogenated hydrocarbons, dialkylsiloxanes, etc. may be exemplified. Examples of hydrocarbons may include hexane, heptane, toluene and cyclohexane; examples of halogenated hydrocarbons include n-butyl chloride, 1,2-dichloroethylene, carbon tetrachloride and chlorobenzene; and examples of dialkylpolysiloxane include dimethylpolysiloxane and methylphenylpolysiloxane.

According to the above preferable embodiments for preparing the solid component (i) wherein two types of contacts are practiced, it is general that dissolution of the magnesium dihalide takes place at the former contact, and precipitation of the solid containing the magnesium dihalide takes place at the latter contact. The precipitated solid should be desirably washed with a solvent compound as described above before use for the further step wherein it is contacted with the component (ii) and others.

<u>Component (ii)</u>

The component (ii) to be used for preparation of the component (A) is a silicon compound represented by the formula: $R^1_mX_nSi(OR^2)_{4-m-n}$ (wherein $R^1$ and $R^2$ are each hydrocarbyl groups, X is a halogen atom, m and n are respectively $0 \leqq m \leqq 3$ and $0 \leqq n \leqq 3$, and yet $0 \leqq (m + n) \leqq 3$). $R^1$ and $R^2$ should be preferably hydrocarbyl groups having 1 to 20 carbon atoms, preferably 1 to 10 carbon atoms). When there are a plurality of $R^1$ (i.e. m = 2 or 3), the respective $R^1$'s may be either the same or different. X is preferably chlorine, at least from economy.

Specific examples may include:
$(CH_3)Si(OCH_3)_3$,
$(CH_3)Si(OC_2H_5)_3$,
$(C_2H_5)_2Si(OCH_3)_2$,
$(n\text{-}C_6H_{11})Si(OCH_3)_3$,
$(C_2H_5)Si(OC_2H_5)_3$,
$(n\text{-}C_{10}H_{21})Si(OC_2H_5)_3$,
$(CH_2=CH)Si(OCH_3)_3$,
$Cl(CH_2)_3Si(OCH_3)_3$,
$Si(OCH_3)_4$,
$Si(OC_2H_5)_3Cl$,
$(C_2H_5)_2Si(OC_2H_5)_2$,
$(C_{17}H_{35})Si(OCH_3)_3$,
$Si(OC_2H_5)_4$,
$(C_6H_5)Si(OCH_3)_3$,
$Si(OCH_3)_2Cl_2$,
$(C_6H_5)_2Si(OCH_3)_2$,
$(C_6H_5)(CH_3)Si(OCH_3)_2$,
$(C_6H_5)Si(OC_2H_5)_3$,
$(C_6H_5)_2Si(OC_2H_5)_2$,
$NC(CH_2)_2Si(OC_2H_5)_3$,
$(C_6H_5)(CH_3)Si(OC_2H_5)_2$,
$(n\text{-}C_3H_7)Si(OC_2H_5)_3$,
$(CH_3)Si(OC_3H_7)_3$,
$(C_6H_5)(CH_2)Si(OC_2H_5)_3$,

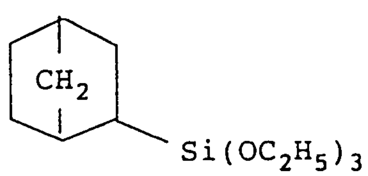
,

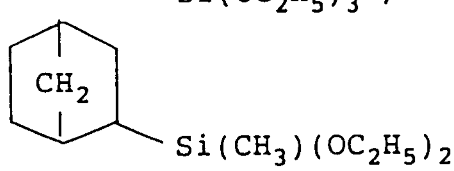
,

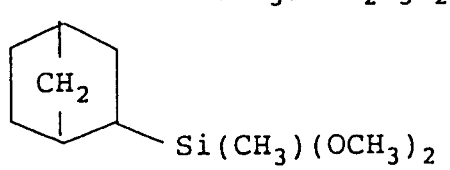
,

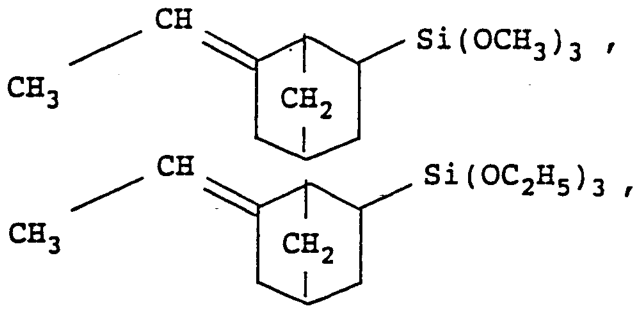

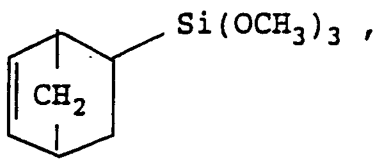

$(CH_3)_3CSi(CH_3)(OCH_3)_2$,
$(CH_3)_3CSi(HC(CH_3)_2)(OCH_3)_2$,
$(CH_3)_3CSi(CH_3)(OC_2H_5)_2$,
$(C_2H_5)_3CSi(CH_3)(OCH_3)_2$,
$(CH_3)(C_2H_5)CH\text{-}Si(CH_3)(OCH_3)_2$,
$((CH_3)_2CHCH_2)_2Si(OCH_3)_2$,
$(C_2H_5)(CH_3)_2CSi(CH_3)(OCH_3)_2$,
$(C_2H_5)(CH_3)_2CSi(CH_3)(OC_2H_5)_2$,
$(CH_3)_3CSi(OCH_3)_3$,
$(CH_3)_3CSi(OC_2H_5)_3$,
$(C_2H_5)_3CSi(OC_2H_5)_3$,
$(CH_3)(C_2H_5)CHSi(OCH_3)_3$,
$(C_2H_5)(CH_3)_2CSi(OCH_3)_3$,
$(C_2H_5)(CH_3)_2CSi(OC_2H_5)_3$.

Among them, preferred are silicon compounds having a hydrocarbyl group such that the carbon at the $\alpha$-position of $R^1$ is secondary or tertiary and the hydrocarbyl group is a branched hydrocarbyl group having 3 to 20 carbon atoms, preferably a hydrocarbyl group such that the carbon at the $\alpha$-position of $R^1$ is tertiary and the hydrocarbyl group is a branched hydrocarbyl group having 4 to 10 carbon atoms.

Component (iii)

The component (iii) to be used for preparation of the component (A) is a silicon compound which increases activity in the resulting catalyst.

The silicon compounds have the formula: $R^4{}_pSiX_{4-p}$ (wherein $R^4$ is a hydrocarbyl group, preferably having about 1 to 10 carbon atoms, X is a halogen atom, and p is a number of $0 \leqq p < 4$) may be included.

Specific examples may include:
$SiCl_4$,
$CH_3SiCl_3$,
$CH_3HSiCl_2$,
$CH_2=CHSiCl_3$,
$CH_3CHClSiCl_3$,
$C_2H_5SiCl_3$,
$(CH_3)_2SiCl_2$,
$HSi(CH_3)_2Cl$,
$C_3H_7SiCl_3$,
$CH_3(C_2H_5)SiCl_2$,
$SiBr_4$,
$(CH_3)_3SiCl$,
$CH_3(CH_2)_3SiCl_3$,
$(C_2H_5)_2SiCl_2$,
$CH_3(CH_2)_4SiCl_3$,

$CH_3(CH_2)_3(CH_3)SiCl_2$,
$(C_6H_5)SiCl_3$,
$(C_6H_5)HSiCl_2$,
(cyclo $C_6H_{11}$)$SiCl_3$,
$(CH_2=CHCH)_2SiCl_2$,
$CH_3(CH_2)_5SiCl_3$,
$C_6H_5CH_2SiCl_3$,
$(C_6H_5)(CH_3)SiCl_2$,

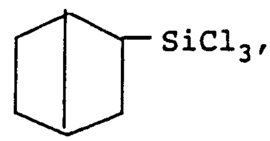

$CH_3(CH_2)_6SiCl_3$,
$CH_3(CH_2)_5(CH_3)SiCl_2$,
$(CH_3)(CH_2)_7SiCl_3$,
$CH_3(CH_2)_6(CH_3)SiCl_2$,
$(CH_3CH_2CH_2)_3SiCl$,
$CH_3(CH_2)_9SiCl_3$,
$CH_3(CH_2)_9(CH_3)SiCl_2$,
$(C_6H_5)_2SiCl_2$.

Among them, preferable are $SiCl_4$, $(CH_3)SiCl_3$ and $(C_2H_5)SiCl_3$.

Component (iv)

The component (iv) to be used for preparation the component (A) is an organoaluminum compound. Specific examples may include:
$Al(C_2H_5)_3$,
$Al(iC_4H_9)_3$,
$Al(nC_4H_9)_3$,
$Al(C_5H_{13})_3$,
$Al(C_8H_{17})_3$,
$Al(C_{10}H_{21})_3$,
$Al(C_2H_5)Cl$,
$Al(iC_4H_9)_2Cl$,
$Al(C_2H_5)_2H$,
$Al(iC_4H_9)_2H$,
$Al(C_2H_5)_2(OC_2H_5)$,
$Al(n\text{-}C_6H_{13})_3$,
methylalmoxanes.

Among them, preferable are $Al(C_2H_5)_3$, $Al(iC_4H_9)_3$ and $Al(C_8H_{17})_3$.

Component (v)

The component (v) to be used as an optional component for preparation of the component (A) is at least one member selected from styrenes, olefins having 4 to 20 carbon atoms and diene compounds having 4 to 20 carbonatoms. When the component (V) is used, the resultant product polymer will have improved powder characteristics in such as bulk density, flowing speed which will be explained hereinbelow.

Specific examples of styrenes may include styrene, and $\alpha$-methyl-styrene.

Specific examples of olefins having 4 to 20 carbon atoms, preferably 4 to 16 carbon atoms, particularly $\alpha$-olefins, may include, 1-butene, 2-butene, isobutylene, 1-pentene, 2-pentene, 2-methyl-1-butene, 3-methyl-1-butene, 1-hexene, 2-hexene, 3-hexene, 2-methyl-1-pentene, 3-methyl-1-pentene, 4-methyl-1-pentene, 2-methyl-2-pentene, 3-methyl-2-pentene, 4-methyl-2-pentene, 2-ethyl-1-butene, 2,3-dimethyl-1-butene, 3,3-dimethyl-1-butene, 2,3-dimethyl-2-butene, 1-heptene, 1-octene, 2-octene, 3-octene, 4-octene, 1-nonene, 1-decene, 1-undecene, 1-dodecene, 1-tridecene, 1-tetradecene, 1-pentadecene, 1-hexadecene, 1-heptadecene, 1-octadecene and 1-nonadecene. Among them, particularly preferred are 1-hexene, 1-octene, 1-decene and styrene.

Specific examples of diene compounds having 4 to 20 carbon atoms, preferably 6 to 14 carbon atoms, may include 1,2-butadiene, isoprene, 1,3-hexadiene, 1,4-hexadiene, 1,5-hexadiene, 1,3-pentadiene, 1,4-pentadiene, 2,3-pentadiene, 2,6-octadiene, cis-2-trans-4-hexadiene, trans-2-trans-4-hexadiene, 1,2-heptadiene, 1,4-heptadiene, 1,5-heptadiene, 1,6-heptadiene, 2,4-heptadiene, dicyclopentadiene, 1,3-cyclohexadiene, 1,4-cyclohexadiene, cyclopentadiene, 1,3-methyl-1,4-hexadiene, 5-methyl-1,4-hexadiene, 1,9-decadiene, 1,13-tetradecadiene and divinylbenzene.

Among them, preferred are styrene, $\alpha$-olefins having 4 to 16 carbon atoms and diene compounds having 6 to 14 carbon atoms.

Preparation of the component (A)

The contacting conditions can be as desired, so long as the advantages inherent in the present invention can be attained, but generally the following conditions are preferred. The contact temperature may be -50 to 200 °C, preferably 0 to 100 °C. As the contacting method, there may be employed the mechanical method wherein a rotating ball mill, a vibrating ball mill, a jet mill, a medium stirring pulverizer or the like is used and the method in which contact is effected with stirring under the presence of an inert diluent. As the inert diluent to be used, aliphatic or aromatic hydrocarbons and halohydrocarbons, polysiloxane, etc. may be exemplified.

The contacting order of the components (i) to (v) in preparing the component (A) of the present invention may be any desired one, so long as the advantages inherent in the present invention are attained.

Specific orders of such contact may include those as shown below. When either one or both of the components (iii) and (v) is not used, the respective amounts used are to be regarded as zero.

(a) component (i) + component (v) + {component (ii) + component (iii) + component (iv)}
(b) component (i) + {component (iii) + component (iv)} + component (ii) + component (v)
(c) component (i) + component (iii) + {component (ii) + component (v) + component (iv)}
(d) component (i) + component (v) + component (iii) + component (iv) + component (ii)
(e) component (i) + component (iv) + component (iii) + component (v) + component (ii)
(f) component (i) + component (iv) + component (iii) + component (v) + component (ii)
(g) component (i) + {component (ii) + component (iii) + component (iv) + component (v)} + {component (ii) + component (iii) + component (iv) + component (v)}

The quantitative ratio of the components (i) to (v) can be any desired one, so long as the advantages inherent in the present invention can be attained, but generally preferred to be within the following ranges.

The quantitative ratio of the component (i) to (ii) may be within the range of 0.01 to 1000, preferably 0.1 to 100, in terms of the atomic ratio (silicon/titanium) of the silicon of the component (ii) to the titanium component constituting the component (i).

Component (iii) is used in an amount within the range of generally 0.01 to 100, preferably 0.1 to 20, in terms of the atomic ratio of the atomic ratio (titanium and/or silicon (component (iii))/{titanium(component (i)-)} of the titanium and/or silicon of the component (iii) to the titanium component constituting the component (i).

The amount of the component (iv) used may be within the range of 0.01 to 100, preferably 0.1 to 30, in terms of the atomic ratio (aluminum/titanium) of the aluminum of the component (iv) to the titanium component constituting the component (i).

When the component (v) which is an optional component is to be used, its amount may be within the range of 0 to 100, generally 0.1 to 100, preferably 1 to 20, in terms of molar ratio relative to the titanium component constituting the component (i). The solid component obtained as described above can be used as the catalyst component (A) in the present invention as such, but the solid component produced can be used as the catalyst component (A) after having been further subjected to preliminary polymerization wherein the solid component is contacted with an olefin in the presence of an organometallic compound such as an organoaluminum or an organozinc compound, before use.

Component (B)

The component (B) is an organoaluminum compound. Specific examples may include those represented by $R^7{}_{3-2}AlX_n$ or $R^8{}_{3-m}Al(OR^9)_m$ (wherein $R^7$ and $R^8$, which may be the same or different, are each hydrocarbyl groups having about 1 to 20 carbon atoms or hydrogen atom, $R^9$ is a hydrocarbyl group, X is a halogen atom, n and m are respectively numbers of $0 \leqq n < 3$, $0 < m < 3$).

Specifically, there may be included (a) trialkylaluminums such as trimethylaluminum, triethylaluminum, triisobutylaluminum, trihexylaluminum, trioctylaluminum and tridecylaluminum; (b) alkylaluminum halides such as diethylaluminum monochloride, diisobutylaluminum monochloride, ethylaluminum sesquichloride and ethylaluminum dichloride; (c) dialkylaluminum hydrides such as diethylaluminum hydride and diisobutylaluminum hydride; (d) aluminum alkoxides such as diethylaluminum ethoxide and diethylaluminum phenoxide.

The organoaluminum compounds of (a) to (c) can be used in combination with alkylaluminum alkoxides, such as, for example, alkylaluminum alkoxides represented by the formula: $R^{10}{}_{3-a}Al(OR^{11})_a$ (wherein $1 \leqq a \leqq 3$, $R^{10}$ and $R^{11}$, which may be either the same or different, are each hydrocarbyl groups having about 1 to 10 carbon atoms). For example, there may be included combinations of triethylaluminum with diethylaluminum ethoxide; of diethylaluminum monochloride with diethylaluminum ethoxide; of ethylaluminum dichloride with ethylaluminum diethoxide; and of triethylaluminum, diethylaluminum ethoxide and diethylaluminum chloride.

The amount of the component (B) used may be 0.1 to 1000, preferably 1 to 100, in terms of weight ratio of the component (B)/component (A).

Polymerization steps

The polymerization steps which are carried out in the presence of the above catalyst components comprise at least the two stages of the step (1) and then step (2).

Formation of the catalyst

The catalyst of the present invention is formed by contacting at once or stepwise the above catalyst components (A) and (B) in the polymerization system or outside the polymerization system.

Polymerization step (1)

The polymerization step (1) is a step in which propylene alone or a propylene/ethylene mixture is fed into a polymerization system having the above catalyst components (A) and (B) to carry out polymerization in one stage or multiple stages to form a propylene homopolymer or a propylene-ethylene copolymer with an ethylene content of 7% by weight or less, preferably 0.5% by weight or less, the amount of polymer produced in this step corresponding to 20 to 80% by weight, more preferably 30 to 70% by weight, most preferably 50 to 65% by weight, of the total weight of the total amount of the polymers to be produced.

If the ethylene content in the propylene-ethylene copolymer exceeds 7% by weight produced in the polymerization step (1), the bulk density of the final polymer is lowered and the amount of the low crystalline polymer produced as a by-product is increased to great extent. On the other hand, if the polymerization quantity is less than the lower limit of the above range, the amount of a by-product of low crystalline polymers is also increased.

The polymerization temperature in the polymerization step (1) may be 30 to 95 °C, preferably about 50 to 85 °C, and the polymerization pressure is generally within the range of 0.9806 to $49033.10^5$ PaG (1 to 50 $kg/cm^2G$). In the polymerization step (1), it is preferable to control an MFR of the polymer produced in the step with the use of a molecular weight controling aid such as hydrogen, and the like thereby to produce the final polymer endowed with higher flowability.

Polymerization step (2)

The polymerization step (2) is a step in which a propylene/ethylene mixture is polymerized in one stage or multiple stages to form a rubbery copolymer of propylene with a polymerization ratio (weight ratio) of propylene/ethylene of 7/30 to 30/70, wherein the amount of polymer produced in this step comprises 80 to 20% by weight, more preferably 70 to 30% by weight, most preferably 50 to 35% by weight, of the quantity of the total amount of polymers produced.

In this polymerization step (2), further comonomer can additionally be used. For example, an $\alpha$-olefin such as 1-butene, 1-pentene, 1-hexene, or the like can be additionally used.

The polymerization temperature in the polymerization step (2) may be about 30 to 90 °C, preferably 50 to 80 °C. The polymerization pressure typically used may be within the range of 0.9806 to $49033.10^5$ PaG (1 to 50 $kg/cm^2G$).

In transferring from the polymerization step (1) to the polymerization step (2), it is preferable to purge propylene gas or propylene/ethylene gas mixture and hydrogen gas from the process product of the step (1) before its transfer to the subsequent step.

In the polymerization step (2), the molecular weight controling agent may be either used or not depending on the purpose.

Polymerization mode

The process for producing the copolymer according to the present invention can be practiced according to any of the batch-wise mode, the continuous mode and the semibatch-wise mode. These polymerization modes may be practiced by a method in which polymerization is carried with the monomer used itself as a polymerization medium or dispersant, a method in which polymerization is carried out in gaseous monomers without use of any polymerization medium added, or a method in which polymerization is carried out in combination of these.

A preferable polymerization method is such that polymerization is carried out in gaseous monomers without use of a polymerization medium, e.g. such that a fluidized bed of the polymer particles formed is formed by the monomer gas stream or that the polymers formed is stirred by a stirrer in a reaction tank.

Copolymer of propylene block copolymer formed

The propylene copolymer to be produced upon carrying out polymerization substantially in the absence of a solvent or a polymerization medium according to the present invention contains a rubbery copolymer of propylene of 20 to 80 % by weight, preferably 20 to 70% by weight, preferably 35 to 60% by weight. Here, "rubbery copolymer of propylene" refers to xylene soluble components at 20 °C.

The present invention is of a process for producing propylene block copolymers. However, the "block copolymer" as herein mentioned does not necessarily mean the ideal form, namely one having the block formed in the step (1) and the block formed in the step (2) existing on one molecular chain, but is inclusive, as conventionally used, of mechanical mixtures of the polymers formed in the respective steps and polymers of various forms between such mixtures and the above ideal block copolymer.

[EXPERIMENTAL EXAMPLES]

Example A-1

[Preparation of component (A)]

Into a flask thoroughly replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask thoroughly replaced in it with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.8 mol of $SiCl_4$ was introduced into the flask at 30 °C over 30 minutes, and the reaction was carried out at 90 °C for one hour. After completion of the reaction, the product was washed with n-heptane.

Into a flask amply replaced with nitrogen was introduced 50 ml of amply purified n-heptane, and then 5 g of the solid component obtained above was introduced. Next, 2.4 ml of $(CH_3)_3CSi(CH_3)(OCH_3)_2$ as the silicon compound of the component (ii), 5.8 ml of $SiCl_4$ of the component (iii), and further 6.0 g of triethylaluminum of the component (iv) were respectively introduced and contacted at 30 °C for 2 hours. After completion of the contact, the product was amply washed with n-heptane to provide a component (A).

[Copolymerization of propylene]

According to the process disclosed in Japanese Patent Publication No. 33721/1986, copolymerization of propylene was carried out wherein a horizontal biaxial gas phase polymerization vessel of 13-liter volume was used.

After replacement of the polymerization vessel with thoroughly purified nitrogen, 400 g of an amply dehydrated and deoxygenated polymer carrier was added. Subsequently, 500 mg of triethylaluminum of the component (B) and 120 mg of the above synthesized component (A) were introduced. In the polymerization step (1) of the first stage, after introduction of 1000 ml of hydrogen, at a temperature controlled to 75 °C, propylene was introduced at a constant rate of 1.3 g/min. The stirring rotation of the polymerization vessel was 350 r.p.m. The polymerization temperature was maintained at 75 °C and, after 3 hours and 30 minutes, introduction of propylene was stopped. Polymerization was continued at 75 °C, and when the polymerization pressure became $0.9806.10^5$ PaG (1 $Kg/cm^2G$), a small amount of the polymer sample was collected.

Then, 500 ml of $H_2$ was added to initiate the polymerization step (2). The second stage polymerization was carried out by introducing 0.59 g/min. of propylene and 0.40 g/min. of ethylene respectively at constant rates at 70 °C for one hour and 50 minutes. Introduction of propylene and ethylene was stopped, and polymerization under the residual pressure was carried out until the polymerization pressure became $0.9806.10^5$ PaG (1 $Kg/cm^2G$). After completion of polymerization, the polymer was taken out after purging the process product to give 383 g of a polymer. The polymer formed had an MFR of 7.7 g/10 min., a polymer bulk density (B.D.) of 0.49 g/cc, and a polymer falling speed of 4.3 sec. The weight of the rubbery copolymer was 29.8% by weight.

There was no polymer adherence in the polymerization vessel at all, and the intermediate sample had an MFR of 17.4 g/10 min.

The "polymer falling speed" means the time required for falling of 50 g of the polymer. The rubbery copolymer weight means the weight of xylene soluble components at 20 °C.

Example A-2

[Synthesis of catalyst component (A)]

In entirely the same manner as in Example A-1, contact between the components (i)-(iv) was effected, and then 3.5 ml of 1,5-hexadiene was added to carry out the reaction at 30 °C for 2 hours. After completion of the reaction, the product was washed with heptane to provide a catalyst component (A).

[Copolymerization of propylene]

In the polymerization conditions in Example A-1, the polymerization time in the polymerization step (1) was changed to 3 hours and 10 minutes, and the polymerization time in the polymerization step (2) to 2 hours and 15 minutes, and following otherwise the same procedure, polymerization was carried out. An amount of 381 g of a polymer was obtained, with MFR = 7.5 g/10 min., polymer B.D. = 0.48 g/cc and polymer falling speed = 4.3 sec. The weight of the rubbery copolymer was 34.2% by weight.

Example A-3

[Synthesis of component (A)]

In entirely the same manner as in Example A-1, contact of the components (i)-(iv) was effected, followed by washing with heptane, to give a solid component. Subsequently, with addition of 1.5 g of styrene, the reaction was carried out at 30 °C for 2 hours, and after completion of the reaction, the product was washed with heptane to give a catalyst component (A).

[Copolymerization of propylene]

In the polymerization conditions in Example A-1, the polymerization time in the polymerization step (1) was changed to 2 hours and 56 minutes, and the polymerization time in the polymerization step (2) to 2 hours and 33 minutes, and following otherwise the same procedure, polymerization was carried out. An amount of 384 g of a polymer was obtained, with MFR = 7.1 g/10 min., polymer B.D. = 0.46 g/cc and polymer falling speed = 4.7 sec. The weight of the rubbery copolymer was 38.8% by weight.

Example A-4

[Synthesis of component (A)]

In synthesis of the component (A) in Example A-1, the amount of $(CH_3)_3CSi(CH_3)(OCH_3)_2$ of the component (ii) used was changed to 3.2 ml, the amount of $SiCl_4$ of component (iii) used was changed to 11.6 ml, and following otherwise the same procedure, synthesis was carried out. Subsequently, with addition of 5.0 g of styrene, the reaction was carried out at 35 °C for 2 hours, and after completion of the reaction, the product was washed with heptane to provide a catalyst component (A).

[Copolymerization of propylene]

In the polymerization conditions in Example A-1, the polymerization time in the polymerization step (1) was changed to 1 hour and 58 minutes, and the polymerization time in the polymerization step (2) to 3 hours and 49 minutes, 77 mg of $B(OCH_3)_3$ was added at the initiation of the polymerization step (2), and following otherwise the same procedure, polymerization was carried out. An amount of 381 g of a polymer was obtained, with MFR = 6.2 g/10 min., polymer B.D. = 0.47 g/cc and polymer falling speed = 4.5 sec. The weight of the rubbery copolymer was 58.8% by weight.

## Claims

**1.** A process for producing a propylene block copolymer, which comprises practicing the polymerization step (1), shown below, in the presence of a catalyst consisting essentially of the catalyst components (A) and (B), shown below, substantially in the absence of a solvent and practicing the polymerization step (2), shown below, by continuing the polymerisation in the presence of said catalyst consisting essentially of components (A), and (B) substantially in the absence of a solvent thereby producing a propylene block copolymer with a content of a rubbery product of 20 to 80 % by weight, preferably 20 to 70% by weight, the rubbery product being xylene soluble at 20 °c;

Catalyst

Component (A):

a solid catalyst component, used as such or after having been subjected to preliminary polymerization wherein the solid catalyst component is contacted with an olefin in the presence of an organometallic compound, obtained by contacting the following components (i) to (v):

component (i): a solid component comprising titanium, magnesium and halogen as the essential components;

component (ii): a silicon compound represented by the formula $R^1{}_mX_nSi(OR^2)_{4-m-n}$ wherein $R^1$ and $R^2$ are each hydrocarbyl groups, X is a halogen atom, m and n are, respectively, numbers satisfying equations $0 \leqq m \leqq 3$ and $0 \leqq n \leqq 3$, and yet $0 \leqq (m + n) \leqq 3$;

component (iii): a silicon compound represented by the formula $R^4{}_pSiX_{4-p}$ wherein $R^4$ is a hydrocarbyl group, X is a halogen atom, and p is a number satisfying an equation $0 \leqq p < 4$;

component (iv): an organoaluminum compound; and optionally

component (v): at least one compound selected from the group consisting of styrenes, olefins having 4 to 20 carbon atoms and diene compounds having 4 to 20 carbon atoms, in an amount of 0 to 100 in terms of molar ratio relative to the titanium component constituting the component (i);

Component (B):

an organoaluminum compound;

Polymerization steps:

(1) the step of polymerizing propylene or a propylene/ethylene mixture in one stage or multiple stages to form a propylene homopolymer or a propylene-ethylene copolymer with an ethylene content of 7% by weight or less, the amount of polymer produced in this step corresponding to 20 to 80% by weight of the total amount of the polymers produced;

(2) the step of polymerizing a propylene/ethylene mixture in a weight ratio of propylene/ethylene of 70/30 to 30/70 in one stage or multiple stages to form a rubbery copolymer of propylene, the amount of polymer produced in this step corresponding to 80 to 20% by weight of the total amount of the polymers produced.

**2.** The process for producing a propylene block copolymer according to claim 1, wherein the component (i) of the catalyst is a contact product of a magnesium dihalide, a titanium tetraalkoxide and/or its

polymer, a polymeric silicon compound having the structure represented by the formula:

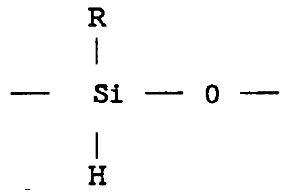

wherein R is a hydrocarbyl group and a titanium halide compound and/or a silicon halide compound.

**3.** The process for producing a propylene block copolymer according to claim 1 or 2, wherein the component (v) of the catalyst is an olefin having 4 to 20 carbon atoms.

**4.** The process for producing a propylene block copolymer according to claim 1 or 2, wherein the component (v) of the catalyst is a diene compound having 4 to 20 carbon atoms.

**5.** The process for producing a propylene block copolymer according to claim 1 or 2, wherein the component (v) of the catalyst is styrene.

**6.** The process for producing a propylene block copolymer according to any one of the claims 1 to 5 , wherein the component (ii) is a silicon compound having a hydrocarbyl group such that the carbon at the $\alpha$-position of $R^1$ is tertiary and the hydrocarbyl group is a branched hydrocarbyl group having 4 to 10 carbon atoms.

**7.** A process as claimed in any of claims 1 to 6, wherein the component (v) is in an amount of 0.1 to 100 in terms of molar ratio relative to the titanium component consisting component (i).

**8.** A process as claimed in any of claims 1 to 7, wherein component (iii) is $SiCl_4$.

**Patentansprüche**

**1.** Verfahren zur Herstellung eines Propylen-Blockcopolymeren umfassend das Durchführen des unten gezeigten Polymerisationsschritts (1) in Gegenwart eines Katalysators, der im wesentlichen aus den unten genannten Katalysator-Komponente (A) und (B) besteht, im wesentlichen in Abwesenheit eines Lösungsmittels und das Durchführen des unten gezeigten Polymerisationsschritts (2) durch Fortführen der Polymerisation in Gegenwart des Katalysators, der im wesentlichen aus den Komponenten (A) und (B) besteht, im wesentlichen in Abwesenheit eines Lösungsmittels zur Herstellung eines Propylen-Blockcopolymeren mit einem Gehalt an gummiartigem Produkt von 20 bis 80 Gew.-%, bevorzugt 20 bis 70 Gew.-%, wobei das gummiartige Produkt bei 20 °C in Xylol löslich ist;

Katalysator

Komponente (A):

eine feste Katalysator-Komponente, die als solche oder nach Vorpolymerisationsbehandlung verwendet wird, wobei die feste Katalysator-Komponente mit einem Olefin in Gegenwart einer Organometall-Verbindung kontaktiert wird, die durch Kontaktieren der folgenden Komponenten (i) bis (v) erhalten wird:

Komponente (i): eine feste Komponente, umfassend Titan, Magnesium und Halogen als wesentliche Komponenten;

Komponente (ii): eine Silizium-Verbindung mit der Formel $R^1{}_mX_nSi(OR^2)_{4-m-n}$, worin $R^1$ und $R^2$ jeweils Kohlenwasserstoff-Gruppen, X ein Halogenatom und m und n Zahlen sind, die die Gleichung $0 \leqq m \leqq 3$ und $0 \leqq n \leqq 3$ und $0 \leqq (m + n) \leqq 3$ erfüllen;

Komponente (iii): eine Silizium-Verbindung mit der Formel $R^4{}_pSiX_{4-p}$, worin $R^4$ eine Kohlenwasserstoff-Gruppe, X ein Halogenatom und p eine Zahl ist, die die Gleichung $0 \leqq p < 4$ erfüllt;

Komponente (iv): einer Organoaluminium-Verbindung und wahlweise

Komponente (v): wenigstens eine Verbindung, ausgewählt aus der Gruppe bestehend aus Styrolen, Olefinen mit 4 bis 20 Kohlenstoffatomen und Dien-Verbindungen mit 4 bis 20 Kohlenstoffatomen, in einer Menge von 0 bis 100, bezogen auf das molare Verhältnis zu der Titan-Komponente in Komponente (i);
Komponente (B):
einer Organoaluminium-Verbindung;
Polymerisationsschritte:
(1) der Schritt des Polymerisierens von Propylen oder eine Propylen/Ethylen-Mischung in einer Stufe oder mehreren Stufen, um ein Propylen-Homopolymer oder ein Propylen-Ethylen-Copolymer mit einem Ethylen-Gehalt von 7 Gew.-% oder weniger zu bilden, wobei die Menge an in diesem Schritt produziertem Polymeren 20 bis 80 Gew.-% der insgesamt reduzierten Polymermenge entspricht;
(2) der Schritt des Polymerisierens einer Propylen/Ethylen-Mischung mit einem Gewichtsverhältnis von Propylen/Ethylen von 70/30 bis 30/70 in einer Stufe oder mehreren Stufen, um ein gummiartiges Propylen-Copolymer zu bilden, wobei die Menge an in diesem Schritt produziertem Polymeren 80 bis 20 Gew.-% der Menge ans insgesamt produziertem Polymer entspricht.

2. Verfahren zur Herstellung eines Propylen-Blockcopolymeren gemäß Anspruch 1, in dem die Komponente (i) des Katalysators, das Produkt der Kontaktierung eines Magnesiumdihalogenids, eines Titantetraalkoxids und/oder deren Polymeren, einer polymeren Silizium-Verbindung mit der in der folgenden Formel dargestellten Struktur:

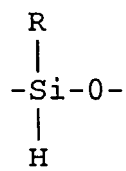

worin R eine Kohlenwasserstoff-Gruppe ist und einer Titanhalogenid-Verbindung und/oder einer Siliziumhalogenid-Verbindung ist.

3. Verfahren zur Herstellung eines Propylen-Blockcopolymeren gemäß Anspruch 1 oder 2, in dem die Komponente (v) des Katalysators ein Olefin mit 4 bis 20 Kohlenstoffatomen ist.

4. Verfahren zur Herstellung eines Propylen-Blockcopolymerenen gemäß Anspruch 1 oder 2, worin Komponente (v) des Katalysators eine Dien-Verbindung mit 4 bis 20 Kohlenstoffatomen ist.

5. Verfahren zur Herstellung eines Propylen-Blockcopolymeren gemäß Anspruch 1 oder 2, worin die Komponente (v) des Katalysators Styrol ist.

6. Verfahren zur Herstellung eines Propylen-Blockcopolymeren gemäß einem der Ansprüche 1 bis 5, worin die Komponente (ii) eine Silizium-Verbindung mit einer Kohlenwasserstoff-Gruppe ist, so daß der Kohlenstoff in $\alpha$-Position von $R^1$ tertiär ist und die Kohlenwasserstoff-Gruppe eine verzweigte Kohlenwasserstoff-Gruppe mit 4 bis 10 Kohlenstoffatomen ist.

7. Verfahren gemäß einem der Ansprüche 1 bis 6, in dem die Komponente (v) in einer Menge von 0,1 bis 100, bezogen auf das molare Verhältnis zu der Titan-Komponente in Komponente (i) vorliegt.

8. Verfahren gemäß einem der Ansprüche 1 bis 7, in dem die Komponente (iii) $SiCl_4$ ist.

**Revendications**

1. Procédé de préparation d'un copolymère séquencé du propylène qui comprend le fait d'effectuer le stade de polymérisation (1) indiqué ci-dessous en présence d'un catalyseur essentiellement constitué des constituants de catalyseur (A) et (B) indiqués ci-dessous, en l'absence pratique de solvant, et d'effectuer le stade de polymérisation (2) indiqué en poursuivant la polymérisation en présence de ce catalyseur essentiellement constitué des constituants (A) et (B), en l'absence pratique de solvant, pour produire ainsi un copolymère séquencé du propylène ayant une teneur en produit caoutchouteux de 20 à 80 % en poids, de préférence de 20 à 70 %, le produit caoutchouteux étant soluble dans le xylène à 20 °C ;

**CATALYSEUR**

**Constituant (A) :**

Un constituant de catalyseur solide, utilisé tel quel ou après avoir été soumis à une polymérisation préliminaire dans laquelle le constituant de catalyseur solide est mis en contact avec une oléfine en présence d'un composé organométallique, obtenu en mettant en contact les constituants (i) à (v) suivants :

constituant (i) : un constituant solide comprenant du titane, du magnésium et un halogène comme constituants essentiels ;

constituant (ii) : un composé du silicium représenté par la formule : $R^1{}_mX_nSi(OR^2)_{4-m-n}$ dans laquelle $R^1$ et $R^2$ sont chacun des groupes hydrocarbyle, X est un atome d'halogène, m et n sont respectivement des nombres satisfaisant aux équations $0 \leqq m \leqq 3$ et $0 \leqq n \leqq 3$, et en outre $0 \leqq (m + n) \leqq 3$ ;

constituant (iii) : un composé du silicium représenté par la formule $R^4{}_pSiX_{4-p}$, dans laquelle $R^4$ est un groupe hydrocarbyle, X est un atome d'halogène et p est un nombre satisfaisant à l'équation $0 \leqq p < 4$ ;

constituant (iv) : un composé organique de l'aluminium ; et, si on le désire,

constituant (v) : au moins un composé choisi dans le groupe consistant en les styrènes, des oléfines en $C_4$ à $C_{20}$ et des diènes en $C_4$ à $C_{20}$, dans un rapport molaire de 0 à 100 par rapport au constituant titane formant le constituant (i) ;

**Constituant (B) :** un composé organique de l'aluminium ;

**STADES DE LA POLYMÉRISATION**

(1) Le stade de polymérisation du propylène ou d'un mélange propylène/éthylène en une seule étape ou en des étapes multiples pour former un homopolymère du propylène ou un copolymère propylène-éthylène ayant une teneur en éthylène de 7 % en poids ou moins, la quantité de polymère produite à ce stade correspondant à 20 à 80 % en poids de la quantité totale des polymères préparés ;

(2) Le stade de polymérisation d'un mélange propylène/éthylène dans un rapport pondéral propylène/éthylène de 70/30 à 30/70, en une seule étape ou en des étapes multiples pour former un copolymère caoutchouteux du propylène, la quantité de polymère formée à ce stade correspondant à 80 à 20 % en poids de la quantité totale des polymères préparés.

**2.** Procédé de préparation d'un copolymère séquencé du propylène selon la revendication 1, dans lequel le constituant (i) du catalyseur est le produit du contact d'un dihalogénure de magnésium, d'un tétraalcoolate de titane et/ou de son polymère, d'un composé polymère du silicium ayant la structure représentée par la formule :

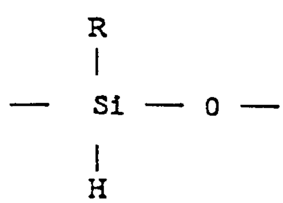

dans laquelle R est un groupe hydrocarbyle et d'un halogénure de titane et/ou d'un halogénure de silicium.

**3.** Procédé de préparation d'un copolymère séquencé du propylène selon la revendication 1 ou 2, dans lequel le constituant (v) du catalyseur est une oléfine en $C_4$ à $C_{20}$.

**4.** Procédé de préparation d'un copolymère séquencé du propylène selon la revendication 1 ou 2, dans lequel le constituant (v) du catalyseur est un diène en $C_4$ à $C_{20}$.

**5.** Procédé de préparation d'un copolymère séquencé du propylène selon la revendication 1 ou 2, dans lequel le constituant (v) du catalyseur est le styrène.

**6.** Procédé de préparation d'un copolymère séquencé du propylène selon l'une quelconque des revendications 1 à 5, dans lequel le constituant (ii) est un composé du silicium ayant un groupe hydrocarbyle

tel que le carbone à la position $\alpha$ de $R^1$ soit tertiaire et le groupe hydrocarbyle est un groupe hydrocarbyle ramifié en $C_4$ à $C_{10}$.

7. Procédé selon l'une quelconque des revendications 1 à 6, dans lequel le constituant (v) est dans un rapport molaire de 0,1 à 100 par rapport au constituant titane formant le constituant (i).

8. Procédé selon l'une quelconque des revendications 1 à 7, dans lequel le constituant (iii) est $SiCl_4$.